# EUROPEAN PATENT SPECIFICATION

(11) **EP 4 094 883 B1**
(45) Date of publication and mention of the grant of the patent: **06.05.2026**
(21) Application number: 20915871.6
(22) Date of filing: 22.09.2020
(51) Int. Cl.: B23Q 5/22, B23Q 1/54, B23C 3/18, B23Q 1/52

(54) **BLADE DISK MACHINING CENTER**
SÄGEBLATTBEARBEITUNGSZENTRUM
CENTRE D'USINAGE DE DISQUE À LAMES

(30) Priority: 22.01.2020 CN 202010075212
(43) Date of publication of application: 30.11.2022
(73) Proprietor: Kede Numerical Control Co., Ltd., Dalian, Liaoning 116000 (CN)
(72) Inventor: CHEN, Hu, Dalian, Liaoning 116000 (CN); LIU, Pei, Dalian, Liaoning 116000 (CN); WANG, Lianyang, Dalian, Liaoning 116000 (CN); SUN, Hongwei, Dalian, Liaoning 116000 (CN); WEI, Zhihong, Dalian, Liaoning 116000 (CN); LI, Shaozhi, Dalian, Liaoning 116000 (CN); TANG, Hongtao, Dalian, Liaoning 116000 (CN); LIN, Meng, Dalian, Liaoning 116000 (CN); SONG, Mingshan, Dalian, Liaoning 116000 (CN); GUO, Hongzhen, Dalian, Liaoning 116000 (CN); GAO, Lujun, Dalian, Liaoning 116000 (CN)
(74) Representative: JD&P Patent Attorneys Joanna Dargiewicz & Partners
(86) International application number: PCT/CN2020/116911
(87) International publication number: WO 2021/147359

(56) References cited:
- EP-A1- 1 757 405
- CN-A- 1 150 078
- CN-A- 102 310 354
- CN-A- 103 143 789
- CN-A- 103 143 789
- CN-A- 107 263 254
- CN-A- 107 322 376
- CN-A- 111 113 122
- CN-U- 202 192 309
- CN-U- 211 760 094
- DE-A1- 102014 225 847

## Description

### TECHNICAL FIELD

The present invention relates to the field of machine tool machining, in particular to a blisk machining center.

### BACKGROUND ART

The use of blisks in aero-engines is a development trend of aero-engine technology in the world. In order to expand the application of blisks in aero-engines, difficulties in manufacturing the blisks must first be solved. At present, our aero engines are less likely to use blisks, and the main reason why they are not widely available is that the technical difficulties of manufacturing the blisks are still not solved. The difficulties in manufacturing aero-engine blisks lie in the complex profile of the blade, high machining accuracy and surface quality requirements, extremely high blade machining consistency, blade machining deformation and the materials used. The surface of the blisk blade is mostly free-form, which puts additional extremely high requirements on the machining accuracy and surface roughness of the blade. It is easier to achieve such machining accuracy when the surface to be machined is plane or cylindrical, but it is more difficult to achieve such machining requirements on a free-form surface. The tool movement space is limited during machining, which makes it more difficult to achieve high machining accuracy for the blade. Therefore, the machining of aero-engine blisks is a problem all over the world. Existing machine tools have extremely high requirements on the motion speed and acceleration range of each physical axis when performing the machining with the 5-axis rotary tool.
CN107263254 A, which forms the basis for the preamble of claim 1, discloses an automatic grinding machine for full profiles of vanes and vane channels of a blisk of an aero-engine. The automatic grinding machine for the full profiles of the vanes and the vane channels of the blisk of the aero-engine comprises a machine body. The machine body is provided with multiple blade machining positions. Each machining position is provided with a grinding head assembly, wherein the grinding head assemblies have different functions. A rotation support which conveys the blisk to be machined to the corresponding machining position is arranged on one side of the machine body. Each grinding head assembly comprises a stand column mechanism and a grinding head. Each stand column mechanism is installed on the blade machining position of the machine body in the Y-axis direction of three-dimensional coordinates in a sliding manner. Each grinding head is detachably installed on the corresponding stand column mechanism in the Z-axis direction of the three-dimensional coordinates in a sliding manner. The automatic grinding machine for the full profiles of the vanes and the vane channels of the blisk of the aero-engine aims to solve the problems that in the prior art, by the adoption of manual grinding of the vanes of the blisk, labor intensity is high, efficiency is low, the surface consistency of the vanes is poor, and the quality is not high.
CN103143789 A discloses a gear cutting machine, which comprises a machine body, a pillar, a toolbox, a sliding table, a rotary table and a swing mechanism, wherein the pillar is movably arranged on the machine body along a first horizontal direction; the sliding table is movably arranged on the machine body along a second horizontal direction; the toolbox is movably arranged on the pillar along the vertical direction; the rotary table is rotatablely arranged on the sliding table; the rotary table is driven by the swing mechanism to rotate; and a driving device of the swing mechanism is arranged on the sliding table. The gear cutting machine is simple in structure, stable and reliable in performance, high in efficiency, small in occupied area and easy in protection and chip removal. Moreover, workpieces and tools can be conveniently assembled and disassembled.
CN1150078 A discloses a numerically controlled grinding machine for grinding preferably metallic workpieces, in particular, tools. It is suitable for grinding metal parts, in particular a CNC grinding machine tools. It comprises a fixed link to a rigid, distortion-free gantry of the bed, the gantry with two side stations and the bed in a horizontally extending distance and on which is mounted a grinding spindle holde, and along a first axis bridge can be adjusted. Bed is designed to protrude from the side of the gantry.

### SUMMARY OF INVENTION

The present invention provides a blisk machining center to overcome the above technical difficulties.

The present invention provides a blisk machining center, including: A-axis rotary assembly, B-axis rotary assembly and C-axis rotary assembly, wherein
the A-axis rotary assembly drives a blisk to rotate,
the B-axis rotary assembly drives an attachment head to rotate, and the attachment head drives a tool to machine the blisk,
the C-axis rotary assembly drives the A-axis rotary assembly to rotate,
the intersection of a rotation axis of the B-axis rotary assembly and a rotation axis of the C-axis rotary assembly is the center of the machining area of the blisk, and a tip point of the tool is on the rotation axis of the B-axis rotary assembly.

Further, the A-axis rotary assembly is an A-axis turntable driving the blisk to rotate,
the B-axis rotary assembly includes an attachment head on which the tool is fixed and a B-axis turntable (5), and the B-axis turntable (5) drives the attachment head (6) to rotate,
the C-axis rotary assembly is a C-axis turntable,
the A-axis turntable and the C-axis turntable are is detachably connected,
the rotation axis of the C-axis turntable is perpendicular to the horizontal plane, and is perpendicular to the rotation axis of the blisk.

Further, the A-axis turntable is fixed to the top surface of the C-axis turntable, and a central axis of the A-axis turntable is the rotation axis of the blisk.

Further, a tool magazine is included for replacing the tool, and the tool magazine is on the same side as the attachment head.

In the present invention, the machining area is near the rotation center of the C-axis turntable, which ensures that the speed and acceleration of the movement of each physical axis are kept within a lower range than those of general machine tools when the machine tool is performing the machining of the 5-axis rotary tool center point (hereinafter referred to as RTCP), and the central axis of the attachment head and the central axis of a ram form an included angle of 45° to ensure that the large speed and acceleration of the linear axis are avoided when the attachment head rotates the RTCP action.

### BRIEF DESCRIPTION OF DRAWINGS

In order to illustrate the embodiments of the present invention or the technical solutions in the prior art more clearly, the following briefly introduces the accompanying drawings that need to be used in the description of the embodiments or the prior art.
FIG. 1 is a schematic diagram of the overall structure of the blisk machining center according to the present invention;
FIG. 2 is another perspective view of the overall structure of the blisk machining center according to the present invention;
FIG. 3 is a top view of the blisk machining center according to the present invention;
FIG. 4 is a flow chart of the blisk machining method according to the present invention;
FIG. 5 shows the velocity profiles of the X-axis, Y-axis and Z-axis during the machining of the blade according to the present invention;
FIG. 6 shows the speed profile of X-axis, Y-axis and Z-axis during the machining of the blade according to the prior art.

### DESCRIPTION OF EMBODIMENTS

In order to make the purposes, technical solutions and advantages of the embodiments of the present invention clearer, the technical solutions in the embodiments of the present invention will be clearly and completely described below with reference to the accompanying drawings in the embodiments of the present invention. Obviously, the embodiments to be described are some, but not all, embodiments of the present invention.

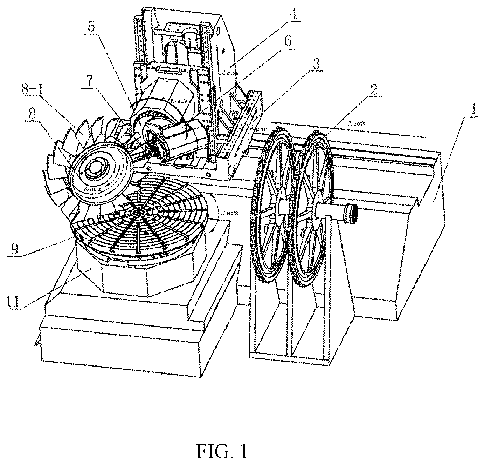

The present invention provides a blisk machining center, as shown in FIG. 1, which is a schematic diagram of the overall structure of the blisk machining center according to the present invention, including: a bed 1, a sliding table 3, column 4 and a ram, wherein the sliding table 3 and the bed 1 are slidably connected through guide rails, the column 4 and the sliding table 3 are slidably connected through guide rails, and one end of the ram and the column 4 are slidably connected through the guide rails, and further including: an A-axis rotary assembly, a B-axis rotary assembly and a C-axis rotary assembly, wherein
the A-axis rotary assembly drives blisk 8 to rotate,
the B-axis rotary assembly drives an attachment head 6 to rotate, and the attachment head 6 drives a tool 7 to machine the blisk 8,
the C-axis rotary assembly drives the A-axis rotary assembly to rotate, wherein
the intersection of a rotation axis of the B-axis rotary assembly and a rotation axis of the C-axis rotary assembly is the center of the machining area of the blisk 8, and a tip point of the tool 7 is on the rotation axis of the B-axis rotary assembly.

Further, the A-axis rotary assembly is an A-axis turntable 10 driving the blisk 8, and the B-axis rotary assembly includes an attachment head 6 on which the tool 7 is fixed and a B-axis turntable 5, the attachment head 6 being a 45° attachment head; one end of the 45° attachment head 6 and one end of the B-axis turntable 5 are rotatably connected, the tool 7 and the other end of the 45° attachment head 6 are fixedly connected, and the tool 7 is coaxial with the 45° attachment head 6; the included angle between the central axis of the tool 7 and the axis of the B-axis turntable 5 is 45°; the C-axis rotary assembly is a C-axis turntable 9 driving the A-axis turntable 10 to rotate; the A-axis turntable 10 and the C-axis turntable 9 are detachably connected, thus allowing to adjust the position of the A-axis turntable 10 before operation, and the drive output end of the A-axis turntable 10 and the blisk 8 are connected; the rotation axis of the C-axis turntable 9 is perpendicular to the horizontal plane, and is perpendicular to the rotation axis of the blisk 8, and the tool 7 machines the blisk 8; and the A-axis rotary assembly and the C-axis rotary assembly are located in front of the 45° attachment head 6.

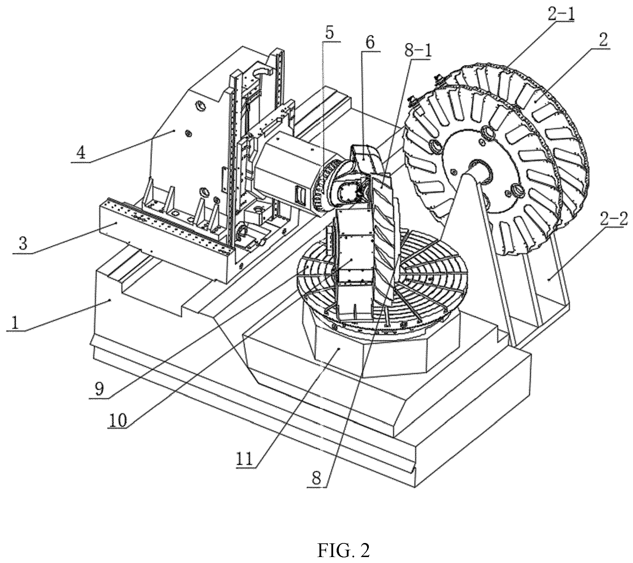

FIG. 2 is another perspective view of the overall structure of the blisk machining center according to the present invention, the blisk machining mechanism including: a B-axis turntable 5 driving the 45° attachment head 6 to rotate, an A-axis turntable 10 driving the blisk 8 to rotate, a C-axis turntable 9 driving the A-axis turntable 10 to rotate and a driving mechanism 11 driving the C-axis turntable 9 to rotate. The C-axis turntable 9 is circular, and the C-axis turntable 9 is parallel to the horizontal plane; the C-axis turntable 9 is fixed on the top surface of the A-axis turntable 10; the driving output end of the driving mechanism 11 and the C-axis turntable 9 are connected; the A-axis turntable 10 and the C-axis turntable 9 are detachably connected, the A-axis turntable 10 has a built-in driving motor, and the output end of the driving motor and the blisk 8 are rotatably connected; the driving mechanism 11 has a built-in driving motor, which drives the C-axis turntable 9 to rotate about C-axis, the C-axis turntable 9 drives the A-axis turntable 10 to rotate synchronously, and the A-axis turntable 10 drives the blisk 8 to rotate about the A-axis; the rotation axis of the C-axis turntable 9 is perpendicular to the horizontal plane and is perpendicular to the rotation axis of the blisk 8, and the tool 7 machines the side edge of the blisk 8.

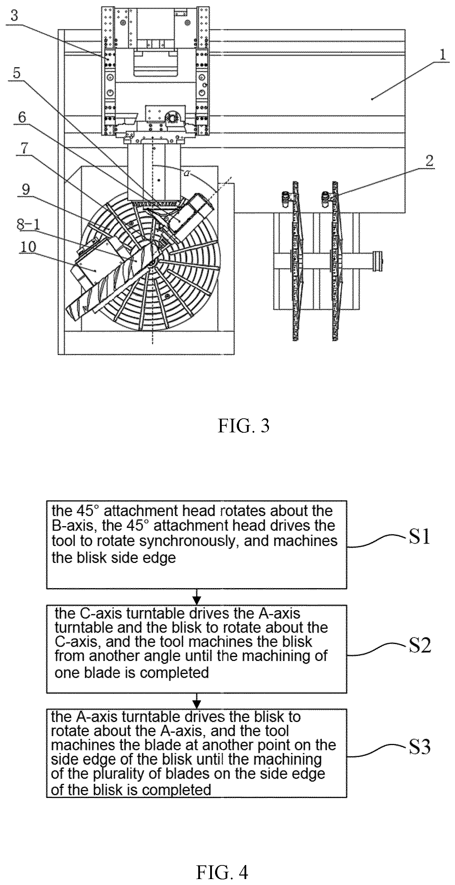

As shown in FIG. 3, the 45° attachment head 6 rotates about the *B-axis*; the intersection of a rotation axis of the B-axis rotary assembly and a rotation axis of the C-axis rotary assembly is the center of the machining area of the blisk 8, and a tip point of the tool 7 is on the rotation axis of the B-axis rotary assembly.

In the present invention, the machining area is near the rotation center of the C-axis turntable, which ensures that the speed and acceleration of the movement of each physical axis are kept within a lower range than those of general machine tools when the machine tool is performing an RTCP machining, and the included angle α between the central axis of the 45° attachment head 6 and the central axis of the B-axis turntable 5 is 45°, to ensure that the large speed and acceleration of the linear axis are avoided when the 45° attachment head rotates the RTCP action.

Further, in order to facilitate the replacement of the tool 7 that is worn out during long-term machining, a tool magazine 2 is further included for replacing the tool 7, and the tool magazine 2 is on the same side as the 45° attachment head 6, the tool magazine 2 including: a cutter head 2-1 and a tool holder 2-2, the cutter head 2-1 being rotatably connected to the tool holder 2-2, the rotation axis of the cutter head 2-1 being parallel to the horizontal plane; the tool 7 is snap connected to the side edge of the cutter head 2-1. The blisk 8 can be machined one by one, and the blades of the blisk 8 can be machined through replacing the tool in the tool magazine 2; the 45° attachment head 6 moves alternately along the Z axis, the Y axis and the X axis to the cutter head 2-1, and the cutter head 2-1 is driven by the motor to rotate (the drive motor of cutter head 2-1 is not illustrated) to make the hole position where the tool 7 is fixed to return to the initial position and the 45° attachment head 6 snaps the used tool into the hole position, and then the cutter head 2-1 rotates the tool 7 fixed thereon to the initial position, and the 45° attachment head 6 grabs the tool and starts to machine the next blisk.

Further, FIG. 4 shows a machining method based on the above-mentioned machining center, including the following steps:
S1: the 45° attachment head rotates about the B-axis, the 45° attachment head drives the tool to rotate synchronously, and machines the blisk side edge;
S2: the C-axis turntable 9 drives the A-axis turntable 10 and the blisk 8 to rotate about the C-axis, and the tool 7 machines the blisk 8 from another angle until the machining of one blade 8-1 is completed;
S3: the A-axis turntable 10 drives the blisk 8 to rotate about the A-axis, and the tool 7 machines the blade at another point on the side edge of the blisk 8 until the machining of the plurality of blades on the side edge of the blisk is completed.
S4: After the blade machining is completed, the 45° attachment head 6 drives the tool 7 to move to the tool magazine 2 along the Z axis to replace the tool 7.

The diameter of the blisk to be machined by the present invention is about 1 m, and the length of the blade is about 200 mm. The present invention uses the C-axis of the C-axis turntable 9 and the B-axis of the 45° attachment head 6 to perform 5-axis RTCP machining. The C-axis of the C-axis turntable 9 is a transfer axis and does not participate in the linked machining.

The present invention has the following advantages:
1. The relative position of the blisk 8 and the C-axis turntable 9 is set to ensure that the machining area is near the rotation center of the C-axis turntable 9, thus ensuring that the speed and acceleration of the movement of each physical shaft can be kept within a lower range than those of general machine tools when the machine tool is performing the machining of the 5-axis rotary tool center point.
2. The central axis of the 45° attachment head 6 and the central axis of the B-axis turntable 5 form an included angle of 45°, and the tip point of the tool 7 is on the central axis of the B-axis turntable 5, to ensure that the large speed and acceleration of the linear axis are avoided when the 45° attachment head performs the RTCP rotation.
3. The bulky spindle is prevented from moving along the X, Y and Z axes during machining.

Therefore, compared with the existing machine tool, the present invention can make the distance between the tool and the rotation center of the 45° attachment head as close as possible when using a longer tool, thereby reducing the speed and acceleration requirements of the RTCP action on the linear axis.

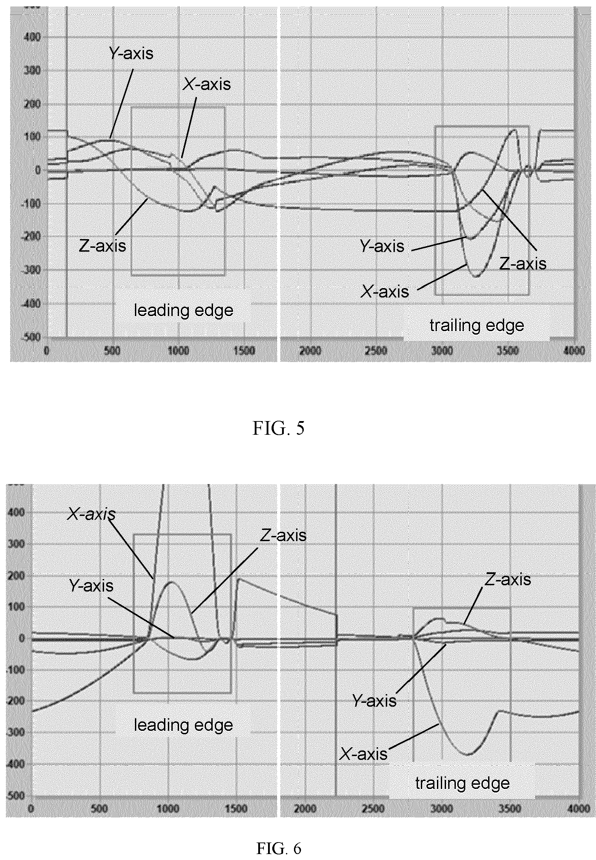

In summary, the present invention has obvious advantages in the blisk machining, especially in the machining of the leading edge and the trailing edge of the blade where the rotary axis movement is large. As a result of the simulation test, FIG. 5 shows the velocity profiles of the X-axis, Y-axis and Z-axis during the machining of the blade according to the present invention, and FIG. 6 shows the velocity profiles of the X-axis, Y-axis and Z-axis during the machining of the blade according to the prior art. After running the same machining program on the present invention and the existing machine tool, and then comparing the velocity profiles of X-axis, Y-axis and Z-axis in FIG. 5 and FIG. 6, it can be seen that the speed and acceleration of each physical shaft when machining the blade according to the present invention can be kept in a lower range than those of the existing machine tool.

Finally, it should be noted that: the above embodiments are only used to illustrate the technical solutions of the present invention, but not to limit them.

## Claims

1. A blisk machining center, comprising: an A-axis rotary assembly, a B-axis rotary assembly and a C-axis rotary assembly, wherein
the A-axis rotary assembly drives the blisk (8) to rotate,
the B-axis rotary assembly drives an attachment head (6) to rotate, and the attachment head (6) drives a tool (7) to machine the blisk (8), and
the C-axis rotary assembly drives the A-axis rotary assembly to rotate, **characterized in that** the intersection of a rotation axis of the B-axis rotary assembly and a rotation axis of the C-axis rotary assembly is the center of the machining area of the blisk (8), and a tip point of the tool (7) is on the rotation axis of the B-axis rotary assembly.

2. The machining center according to claim 1, wherein
the A-axis rotary assembly is an A-axis turntable (10) driving the blisk (8) to rotate,
the B-axis rotary assembly includes an attachment head (6) on which the tool (7) is fixed and a B-axis turntable (5), and the B-axis turntable (5) drives the attachment head (6) to rotate,
the C-axis rotary assembly is a C-axis turntable (9),
the A-axis turntable (10) and the C-axis turntable (9) are detachably connected,
the rotation axis of the C-axis turntable (9) is perpendicular to the horizontal plane, and is perpendicular to the rotation axis of the blisk (8).

3. The machining center according to claim 2, wherein
the A-axis turntable (10) is fixed to the top surface of the C-axis turntable (9), and a central axis of the A-axis turntable (10) is the rotation axis of the blisk (8).

4. The machining center according to claim 3, further comprising a tool magazine (2) for changing the tool (7), wherein the tool magazine (2) is on the same side as the attachment head (6).

## Patentansprüche

1. Bearbeitungszentrum für Blisk, umfassend: eine A-Achsen-Drehanordnung, eine B-Achsen-Drehanordnung und eine C-Achsen-Drehanordnung, wobei
die A-Achsen-Drehanordnung das Blisk (8) zur Drehung antreibt,
wobei die B-Achsen-Drehanordnung einen Aufsatzkopf (6) zur Drehung antreibt und der Aufsatzkopf (6) ein Werkzeug (7) zur Bearbeitung des Blisks (8) antreibt, und
die C-Achsen-Drehanordnung die A-Achsen-Drehanordnung zur Drehung antreibt, **dadurch gekennzeichnet, dass**
der Schnittpunkt einer Drehachse der B-Achsen-Drehanordnung und einer Drehachse der C-Achsen-Drehanordnung der Mittelpunkt des Bearbeitungsbereichs des Blisks (8) ist und eine Spitze des Werkzeugs (7) auf der Drehachse der B-Achsen-Drehanordnung liegt.

2. Bearbeitungszentrum nach Anspruch 1, wobei
die A-Achsen-Drehanordnung ein A-Achsen-Drehtisch (10) ist, der das Blisk (8) zur Drehung antreibt,
wobei die B-Achsen-Drehanordnung einen Aufsatzkopf (6), auf dem das Werkzeug (7) befestigt ist, und einen B-Achsen-Drehtisch (5) beinhaltet, wobei der B-Achsen-Drehtisch (5) den Aufsatzkopf (6) zur Drehung antreibt,
wobei die C-Achsen-Drehanordnung ein C-Achsen-Drehtisch (9) ist,
wobei der A-Achsen-Drehtisch (10) und der C-Achsen-Drehtisch (9) abnehmbar verbunden sind,
wobei die Drehachse des C-Achsen-Drehtischs (9) senkrecht zur horizontalen Ebene und senkrecht zur Drehachse des Blisks (8) ist.

3. Bearbeitungszentrum nach Anspruch 2, wobei
der A-Achsen-Drehtisch (10) auf der Oberseitenfläche des C-Achsen-Drehtisches (9) befestigt ist und eine Mittelachse des A-Achsen-Drehtisches (10) die Drehachse des Blisks (8) ist.

4. Bearbeitungszentrum nach Anspruch 3, ferner umfassend ein Werkzeugmagazin (2) zum Wechseln des Werkzeugs (7), wobei sich das Werkzeugmagazin (2) auf derselben Seite wie der Aufsatzkopf (6) befindet.

## Revendications

1. Centre d'usinage de disque monobloc, comprenant : un ensemble rotatif d'axe A, un ensemble rotatif d'axe B et un ensemble rotatif d'axe C, dans lequel
l'ensemble rotatif d'axe A entraîne le disque monobloc (8) en rotation,
l'ensemble rotatif d'axe B entraîne une tête de fixation (6) en rotation, et la tête de fixation (6) entraîne un outil (7) pour usiner le disque monobloc (8), et
l'ensemble rotatif d'axe C entraîne l'ensemble rotatif d'axe A en rotation, **caractérisé en ce que**
l'intersection d'un axe de rotation de l'ensemble rotatif d'axe B et d'un axe de rotation de l'ensemble rotatif d'axe C est le centre de la zone d'usinage du disque monobloc (8), et un point d'extrémité de l'outil (7) se trouve sur l'axe de rotation de l'ensemble rotatif d'axe B.

2. Centre d'usinage selon la revendication 1, dans lequel
l'ensemble rotatif d'axe A est un plateau tournant d'axe A (10) entraînant le disque monobloc (8) en rotation,
l'ensemble rotatif d'axe B comporte une tête de fixation (6) sur laquelle l'outil (7) est fixé et un plateau tournant d'axe B (5), et le plateau tournant d'axe B (5) entraîne la tête de fixation (6) en rotation,
l'ensemble rotatif d'axe C est un plateau tournant d'axe C (9),
le plateau tournant d'axe A (10) et le plateau tournant d'axe C (9) sont reliés de manière amovible,
l'axe de rotation du plateau tournant d'axe C (9) est perpendiculaire au plan horizontal, et est perpendiculaire à l'axe de rotation du disque monobloc (8).

3. Centre d'usinage selon la revendication 2, dans lequel
le plateau tournant d'axe A (10) est fixé à la surface supérieure du plateau tournant d'axe C (9), et un axe central du plateau tournant d'axe A (10) est l'axe de rotation du disque monobloc (8).

4. Centre d'usinage selon la revendication 3, comprenant en outre un magasin d'outils (2) destiné à changer l'outil (7), dans lequel le magasin d'outils (2) se trouve du même côté que la tête de fixation (6).
